# EUROPEAN PATENT SPECIFICATION

(11) **EP 1 780 821 B1**
(45) Date of publication and mention of the grant of the patent: **26.08.2009**
(21) Application number: 05765728.0
(22) Date of filing: 14.07.2005
(51) Int. Cl.: H01M 4/75, B22F 1/00, C23C 18/31, H01M 4/06, H01M 4/42, H01M 4/62, H01M 4/66, H01M 6/08

(54) **CYLINDRICAL ALKALINE BATTERY**
ZYLINDRISCHE ALKALI-BATTERIE
PILE ALCALINE CYLINDRIQUE

(30) Priority: 16.07.2004 JP 2004209929
(43) Date of publication of application: 02.05.2007
(73) Proprietor: FDK Energy Co., Ltd., Shizuoka 4310495 (JP)
(72) Inventor: MURAKAMI, Yukiyoshi, FDK ENERGY CO., LTD., Kosai-shi Shizuoka 431-0495 (JP); TSUTSUI, Kiyohide, FDK ENERGY CO., LTD., Kosai-shi Shizuoka 431-0495 (JP)
(74) Representative: Bailey, Lindsey
(86) International application number: PCT/JP2005/013024
(87) International publication number: WO 2006/009060

(56) References cited:
- EP-A1- 0 945 908
- JP-A- 5 109 411
- JP-A- 2004 146 294
- JP-B2- 3 089 440
- JP-B2- 3 352 965
- JP-B2- 3 434 961
- US-A1- 2003 211 394

## Description

### CROSS-REFERENCE TO RELATED APPLICATIONS

The present application claims priority from Japanese Patent Application No. 2004-209929 filed on July 16, 2004, which is herein incorporated by reference.

### TECHNICAL FIELD

The present invention relates to a cylindrical alkaline battery and particularly to an alkaline dry battery using a mercury-free alloy with zinc as the main ingredient as an active material of its anode gel.

### BACKGROUND ART

For example, cylindrical alkaline batteries (dry batteries) such as LR03 use an alloy with zinc as the main ingredient as an active material of their anode gel, and copper or an alloy with copper as the main ingredient as an anode electron collector.

In an alkaline battery using zinc as the anode active material, the corrosion of zinc causes hydrogen gas to be generated while the battery is being saved, increasing pressure inside the battery, and thus, the relief valve of its resin-made sealing gasket is activated thereby causing the electrolyte and the like to flow out of the battery, that is, liquid leakage. As a countermeasure against this, to date, amalgamated zinc powder by adding mercury has been usually used as the anode active material. The addition of mercury increases the hydrogen over-voltage of zinc as the anode active material, thus effectively preventing the corrosion of the zinc and suppressing the generation of hydrogen gas in batteries.

On the other hand, in the case of using a mercury-free alloy with zinc as the main ingredient as the active material of its anode gel, the problem occurs that impurities such as Fe, Ni, Cr, or Co sticking to the surface of the anode electron collector promote the corrosion of the zinc in the anode gel, thus increasing the amount of hydrogen gas generated. While material such as copper or copper alloy is used as the anode electron collector, the above impurities may stick to wire rods of the material during a stretching manufacture process or the like, and hence, it is difficult to completely remove these impurities from the surface of the anode electron collector.

As means to solve the above problem, in the conventional art, as disclosed in, e.g., Japanese Patent Application Laid-Open Publication No. H05-109411, the surface of the anode electron collector is electroless-plated with Sn of high hydrogen over-voltage so as to form a plate film of 0.10 µm or greater in thickness. It is perceived that the Sn with which to have been electroless-plated is expected to conceal impurities such as Fe, Ni, Cr, or Co sticking to the surface of the anode electron collector, thereby suppressing the generation of hydrogen gas and improving an anticorrosion quality. Similarly, it is disclosed in Japanese Patent Application Laid-Open Publication No. H06-20694 that the surface of the electron collector is electroless-plated with an alloy including at least two metals of Sn, Pb, and Cu of high hydrogen over-voltage so as to form a plate film of 0.10 µm or greater in thickness.

However, even if the surface of the anode electron collector has been electroless-plated with Sn or the like, when the battery used up, i.e. over-discharged, is being saved for a long time, it is often the case that hydrogen gas is generated thus causing liquid leakage, which fact was found by the present inventors.

According to the above Japanese Patent Application Laid-Open Publications, in order to suppress the generation of hydrogen gas, the impurities on the surface of the anode electron collector need to be completely concealed, and thus, electroless-plating with Sn or the like to form a plate film of 0.10 µm or greater in thickness needs to be performed.

However, according to the knowledge of the present inventors, in an over-discharged battery, plate material precipitates in a high concentration in the anode gel around the anode electron collector, thus causing gas generation in the over-discharged battery, which fact was found by them. That is, it was found that in the over-discharged battery, Sn with which to have been electroless-plated to conceal impurities on the surface of the anode electron collector also causes an anti-liquid leakage quality to decrease.

### DISCLOSURE OF THE INVENTION

The present invention was made in view of the above incompatible problems, and an object thereof is to improve the anti-liquid leakage quality, especiallywhen over-discharged, of cylindrical alkaline batteries using a mercury-free alloy with zinc as the main ingredient as an active material of its anode gel.

The present invention provides (1) a cylindrical alkaline battery which uses a mercury-free alloy with zinc as a main ingredient as an active material of its anode gel and copper or an alloy with copper as a main ingredient as its anode electron collector, characterized in that a surface of the anode electron collector is electroless-plated with Sn to form an electroless plate film of 0.07 to 0.095 µm in thickness.

For the alkaline battery (1), it is preferable to provide the following features (2), (3).
(2) The cylindrical alkaline battery according to the (1), characterized in that granularity of the mercury-free alloy with zinc as the main ingredient used as the active material of the anode gel is in the range of 50 to 250 mesh.
(3) The cylindrical alkaline battery according to the (1) or (2), characterized in that an oxide of a metal such as In is added to the anode gel in a concentration of 20 to 2,000 ppm of the total amount of the anode gel.

### BRIEF DESCRIPTION OF THE DRAWINGS

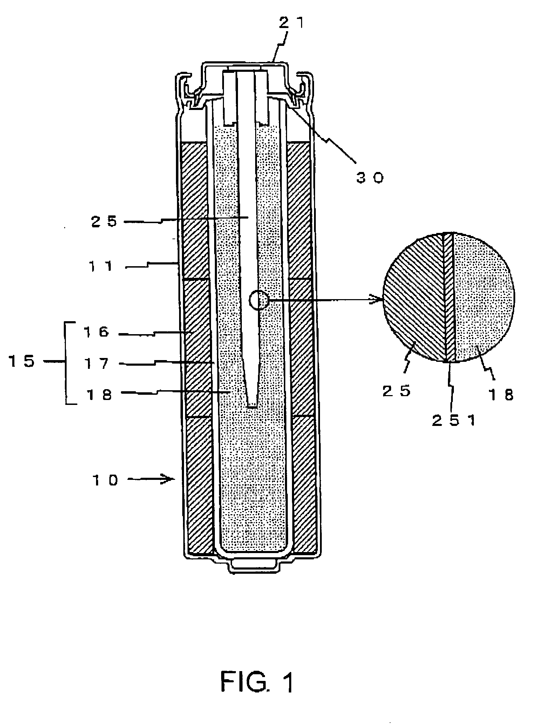

FIG. 1 is a sectional view of an embodiment of a cylindrical alkaline battery that technology of the present invention has been applied to.

### <Explanation of Reference Numerals>

10 Cylindrical alkaline battery
11 Metal-made battery can
15 Alkaline electric element
16 Cathode mixture
17 Separator
18 Anode gel (anode mixture)
21 Metal-made anode terminal plate
25 Anode electron collector
251 Electroless plate film
30 Resin-made sealing gasket

### BEST MODE FOR CARRYING OUT THE INVENTION

FIG. 1 shows one embodiment of a cylindrical alkaline battery to which technology of the present invention has been applied. The cylindrical alkaline battery 10 of the Figure is an LR03 (size AAA) alkaline dry battery, and has a bottomed cylindrical metal-made battery can 11 for housing an alkaline electric element 15, a metal-made anode terminal plate 21 for closing the opening of the battery can 11, and a resin-made sealing gasket 30 interposed between the anode terminal plate 21 and the battery can 11 to induce an air-tightly sealing state.

The alkaline electric element 15 comprises a cathode mixture 16, a separator 17, and an anode gel (anode mixture) 18. The cathode mixture 16 is formed like a tube in shape and has been loaded into the battery can 11 under pressure. The battery can (cathode can) 11 is both a cathode hole collector and a cathode terminal.

The separator 17 with an alkaline electrolyte having permeated is placed inside the cathode mixture 16. The inside of the separator 17 is filled with the anode gel 18 of gel-like zinc. A rod-like, metal-made anode electron collector 25 is inserted in the anode gel 18. The anode electron collector 25 is spot-welded to the metal-made anode terminal plate 21.

The cathode mixture 16 is produced by forming a kneaded mixture to an annular shape under pressure which is made up of electrolytic manganese dioxide, graphite conductive material, a binder, a KOH aqueous solution, and the like.

The anode gel 18, an anode mixture, is made of a mercury-free alloy with zinc as the main ingredient as an anode active material, and the alloy has granularity in the range of 50 to 250 mesh. An oxide of a metal such as In may be added to the anode gel 18 in a concentration of 20 to 2, 000 ppm of the total amount of the anode gel.

The anode electron collector 25 is made of copper or an alloy with copper as the main ingredient. The surface of the anode electron collector 25 is electroless-plated with Sn to form an electroless plate film of a thickness in the range of 0.05 to 0.095 µm. The reference numeral 251 indicates the electroless plate film.

Here, the present inventors found that, in the case of electroless-plating the surface of the anode electron collector 25 with Sn, if the plate thickness is smaller than the above range, impurities such as Fe, Ni, Cr, or Co sticking to the surface of the anode electron collector 25 are not concealed sufficiently, and hence, the generation of hydrogen gas due to the impurities occurs while the battery is being saved. If being greater than the above range, when the battery is over-discharged, the amount of Sn which precipitates in the anode gel increases causing gas generation in the battery. That is, in order to improve both an anti-liquid leakage quality while saved and an anti-liquid leakage quality when over-discharged, to set the thickness of the electroless plate film 251 at a value in the range of 0.05 to 0.095 µm was found singularly effective.

Furthermore, in the above battery, the alloy in the anode gel 18 with zinc as the main ingredient is of granularity in the range of 50 to 250 mesh, where more coarse grains are selectively removed than in the conventional art. This was found to improve its discharge usage rate and further suppress the gas generation in the battery when over-discharged.

### <Examples>

Typical examples will be shown below.

### <Example 1>

As example 1, cylindrical alkaline batteries (LR03) having the structure shown in FIG. 1 were produced according to the specification 1.

### ===Specification 1===

(1) Cathode mixture: made from electrolytic manganese dioxide, graphite as a conductive material, a binder, and a 40% KOH aqueous solution.
(2) Anode gel: made from zinc alloy of granularity in the range of 50 to 250 mesh, a 40% KOH aqueous solution, and polyacrylic acid as a viscosity increasing material .
(3) Additives to the anode gel: none
(4) Anode electron collector: a brass plate as abase having its surface electroless-plated with Sn.
(5) Thickness of the electroless plate on the anode electron collector surface: 0.07 to 0.095 µm

### <Example 2>

As example 2, cylindrical alkaline batteries (LR03) having the structure shown in FIG. 1 were produced according to the specification 2.

### ===Specification 2===

(1) Cathode mixture: the same as in the specification 1.
(2) Anode gel: the same as in the specification 1.
(3) Additives to the anode gel: indium oxide that is added in a concentration of 100 ppm to the anode gel.
(4) Anode electron collector: the same as in the specification 1.
(5) Thickness of the electroless plate on the anode electron collector surface: the same as in the specification 1 (0.07 to 0.095 µm).

### <Comparative example 1>

As comparative example 1, cylindrical alkaline batteries (LR03) having the same structure as shown in FIG. 1 were produced according to the specification 3.

### ===Specification 3===

(1) Cathode mixture: the same as in the specification 1.
(2) Anode gel: the same as in the specification 1.
(3) Additives to the anode gel: none
(4) Anode electron collector: the same as in the specification 1.
(5) Thickness of the electroless plate on the anode electron collector surface: 1.4 to 1.9 µm

### ==Results of Evaluation Test==

In an evaluation test, for each of batteries according to the specifications 1 to 3, the states of Pb, Cu, and Sn having precipitated in the anode gel were analyzed and the occurrence of liquid leakage was examined, thereby obtaining the following results.

### ===Example 1 (Specification 1)===

For batteries of Example 1 produced according to the specification 1, as to the states of Pb, Cu, and Sn having precipitated in the anode gel, analysis results were obtained as shown in Table 1.

**Table 1: Analysis results of the concentrations of metals having precipitated in batteries of Example 1**

| Discharge state | Non-discharged | 50% discharged | 110% discharged |
|---|---|---|---|
| Pb | < 3 ppm | <3 ppm | 10 ppm |
| Cu | < 12 ppm | < 12 ppm | 16 ppm |
| Sn | < 5 ppm | < 5 ppm | 43 ppm |

In Table 1, for the discharge state, 100% denotes a time until the battery voltage reaches 0.6 V in a discharge through a load of 4 Ω at 20 °C. The same applies to Tables 3, 5.

From a liquid leakage test, results were obtained as shown in Table 2.

**Table 2: Liquid leakage test results with batteries of Example 1 (n = 10)**

| Liq. leakage occurrence rate | 2 days later | 5 days later | 10 days later | 15 days later | 20 days later |
|---|---|---|---|---|---|
| Saved at 60 °C | 0% | 0% | 0% | 70% | 100% |
| Saved at 70 °C | 0% | 0% | 40% | 100% | - |

### ===Example 2 (Specification 2)===

For batteries of Example 2 produced according to the specification 2, as to the states of Pb, Cu, and Sn having precipitated in the anode gel, analysis results were obtained as shown in Table 1.

**Table 3: Analysis results of the concentrations of metals having precipitated in batteries of Example 2**

| Discharge state | Non-discharged | 50% discharged | 110% discharged |
|---|---|---|---|
| Pb | < 3 ppm | < 3 ppm | 10 ppm |
| Cu | < 12 ppm | < 12 ppm | 16 ppm |
| Sn | < 5 ppm | < 5 ppm | 43 ppm |

From the liquid leakage test, results were obtained as shown in Table 4.

**Table 4: Liquid leakage test results with batteries of Example 2 (n = 10)**

| Liq. leakage occurrence rate | 2 days later | 5 days later | 10 days later | 15 days later | 20 days later |
|---|---|---|---|---|---|
| Saved at 60 °C | 0% | 0% | 0% | 0% | 0% |
| Saved at 70 °C | 0% | 0% | 0% | 0% | 0% |

### ===Comparative example 1 (Specification 3)===

For batteries of Comparative example 1 produced according to the specification 3, as to the states of Pb, Cu, and Sn having precipitated in the anode gel, analysis results were obtained as shown in Table 5.

**Table 5: Analysis results of the concentrations of metals having precipitated in batteries of Compar. example 1**

| Discharge state | Non-discharged | 50% discharged | 110% discharged |
|---|---|---|---|
| Pb | < 3 ppm | < 3 ppm | 10 ppm |
| Cu | < 12 ppm | < 12 ppm | 16 ppm |
| sn | < 5 ppm | < 5 ppm | 330 ppm |

From the liquid leakage test, results were obtained as shown in Table 6.

**Table 6: Liquid leakage test results with batteries of Comparative example 1 (n = 10)**

| Liq. leakage occurrence rate | 2 days later | 5 days later | 10 days later | 20 days later |
|---|---|---|---|---|
| Saved at 60 °C | 0% | 60% | 100% | - |
| Saved at 70 °C | 0% | 100% | - | - |

According to the results of the above evaluation test, with batteries of Comparative example 1, a large amount (330 ppm) of Sn with which the anode electron collector surface was electroless-plated precipitated in the anode gel when over-discharged as shown in Table 5.

On the other hand, with batteries of Examples 1 and 2, a suppressed amount (43 ppm) of Sn with which the anode electron collector surface was electroless-plated precipitated in the anode gel even when over-discharged as shown in Tables 1 and 3.

Correspondingly, with batteries of Comparative example 1, the liquid leakage occurred at high frequencies as shown in Table 6, but with batteries of Examples 1 and 2, the frequencies of the liquid leakage occurrence were greatly reduced as shown in Tables 2 and 4.

Furthermore, comparing Example 1 (Table 2) and Example 2 (Table 4), it is seen that Example 2 had a further improved anti-liquid leakage quality. It is perceived that this is because an oxide of a metal such as In was added to the anode gel in a concentration of 20 to 2,000 ppm of the total amount of the anode gel.

The present invention has been described by way of its typical embodiment, but various embodiments other than the above embodiment are possible. For example, the present invention can also be applied to cylindrical alkaline batteries other than LR03.

### INDUSTRIAL APPLICABILITY

The anti-liquid leakage quality, especially when over-discharged, of a cylindrical alkaline battery can be improved which uses a mercury-free alloy with zinc as the main ingredient as an active material of its anode gel.

## Claims

1. A cylindrical alkaline battery which uses a mercury-free alloy with zinc as a main ingredient as an active material of its anode gel and copper or an alloy with copper as a main ingredient as its anode electron collector, **characterized in that** a surface of the anode electron collector is electroless-plated with Sn to form an electroless plate film of 0.07 to 0.095 µm in thickness.

2. The cylindrical alkaline battery according to claim 1, **characterized in that** granularity of the mercury-free alloy with zinc as the main ingredient used as the active material of the anode gel is in the range of 50 to 250 mesh.

3. The cylindrical alkaline battery according to claim 1 or 2, **characterized in that** an oxide of a metal such as In is added to the anode gel in a concentration of 20 to 2,000 ppm of the total amount of the anode gel.

## Patentansprüche

1. Eine zylindrische Alkali-Batterie, die eine quecksilberfreie Legierung mit Zink als ein Hauptinhaltsstoff als aktives Material für ihr Anodengel und Kupfer oder eine Legierung mit Kupfer als Hauptinhaltsstoff als ihr Anoden-Elektronenkollektor nutzt, **dadurch gekennzeichnet, dass** eine Oberfläche des Anoden-Elektronenkollektors stromlos mit Sn plattiert ist, um einen stromlosen plattierten Film einer Dicke von 0,07 bis 0,095 µm zu bilden.

2. Die zylindrische Alkali-Batterie nach Anspruch 1, **dadurch gekennzeichnet, dass** die Körnung der quecksilberfreien Legierung mit Zink als Hauptinhaltsstoff, der als das aktive Material an dem Anodengel eingesetzt wird, im Bereich von 50 bis 250 mesh liegt.

3. Die zylindrische Alkali-Batterie nach Anspruch 1 oder 2, **dadurch gekennzeichnet, dass** ein Oxid eines Metalls wie In dem Anodengel in einer Konzentration von 20 bis 2.000 ppm, bezogen auf die Gesamtmenge des Anodengels, zugefügt wird.

## Revendications

1. Pile alcaline cylindrique qui utilise un alliage exempt de mercure avec du zinc comme ingrédient principal en guise de matériau actif de son gel anodique et du cuivre ou un alliage avec du cuivre comme ingrédient principal en guise de son collecteur d'électrons anodiques,
**caractérisée en ce qu'**une surface du collecteur d'électrons anodiques est plaquée sans électrolyse avec Sn pour former un film plaqué sans électrolyse de 0,07 à 0,095 µm d'épaisseur.

2. Pile alcaline cylindrique selon la revendication 1,
**caractérisée en ce que** la granularité de l'alliage exempt de mercure avec du zinc comme ingrédient principal utilisé en guise du matériau actif du gel anodique est dans la gamme de 50 à 250 mesh.

3. Pile alcaline cylindrique selon la revendication 1 ou la revendication 2, **caractérisée en ce qu'**un oxyde d'un métal tel que In est ajouté au gel anodique dans une concentration de 20 à 2000 ppm de la quantité totale du gel anodique.
